# EUROPEAN PATENT APPLICATION

(11) **EP 4 797 155 A1**
(43) Date of publication of application: **26.08.2026**
(21) Application number: 26160425.0
(22) Date of filing: 24.02.2026
(51) Int. Cl.: G06N 3/045, G06N 3/0495, G06N 3/063

(54) **RECONFIGURABLE HARDWARE AND METHOD FOR SPARSITY-BASED LOSSLESS AND QUASI-LOSSLESS ON-THE-FLY NEURAL NETWORKS DECOMPRESSION**

(30) Priority: 25.02.2025 US 202519063047
(71) Applicant: STMicroelectronics International N.V., 1228 Plan-les-Ouates, Geneva (CH)
(72) Inventor: MASSA, Riccardo, 20900 MONZA - (MONZA-BRIANZA) (IT); BOESCH, Thomas, 6821 ROVIO (CH); SINGH, Surinder Pal, 201301 NOIDA - UTTAR PRADESH (IN); DESOLI, Giuseppe, 22042 SAN FERMO DELLA BATTAGLIA (IT); CAPPETTA, Carmine, 20146 MILANO (MI) (IT)
(74) Representative: Cabinet Beaumont

(57) **Abstract**

A neural processing unit implements a neural network and includes a decompression unit including a plurality of decompression cores. During operation of the neural network, compressed kernel data is streamed from an onboard storage to the decompression unit. The decompression unit includes multiple decompression cores. The decompression unit selectively configures the decompression cores to utilize a plurality of decompression algorithms and switches between the multiple decompression algorithms on-the-fly to properly decompress the compressed kernel data in a lossless manner.

## Description

### BACKGROUND

### Technical Field

The present disclosure generally relates to neural networks, and more particularly to compression and decompression of kernel data in neural networks.

### Description of the Related Art

Deep learning algorithms promote very high performance in numerous applications involving recognition, identification and/or classification tasks, however, such advancements may come at the price of significant usage of processing power. Thus, their adoption can be hindered by a lack of availability of low-cost and energy-efficient solutions. Accordingly, severe performance specifications may coexist with tight constraints in terms of power and energy consumption while deploying deep learning applications on embedded devices. Furthermore, in some cases there are relatively tight restraints on the amount of onboard memory in neural processing units.

Kernel data is one type of data that may be stored in onboard memory of a neural processing unit. The kernel data can include parameters such as the weight values for layers of a neural network. Technical problems related to the storage of kernel data include that large kernels may call for high memory occupation, thereby leading to limitations in neural network size for applications in which on-device memory is limited. Loading/storing high amount of kernel/feature data can lead to high power consumption that increases with the kernel and feature size. Loading/storing high amount of kernel/feature data can call for high throughput rates which might be difficult to achieve without a dedicated compression strategy or more resources.

Weights sparsity is one possible solution for reducing the computational expenses for neural network in-hardware inference acceleration. In such a solution, the network is trained to reduce the amount of non-zero weight values in the kernel data, thus increasing the number of zero weights that can be exploited to reduce computation workload.
To exploit sparsity to reduce memory footprint and power consumption, a weight compression technique is utilized. The compression takes advantage of the high number of zeros to decrease the amount of stored data.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### BRIEF SUMMARY

Embodiments of the present disclosure utilize a plurality of compression algorithms and corresponding decompression hardware in a neural processing unit to improve the efficiency in storage of compressed kernel data and the decompression of the kernel data. After training of the neural processing unit, each portion of the kernel data is compressed with a compression technique selected based on the characteristics of the portion of the kernel data. The kernel data is then stored in an onboard storage of the neural processing unit including metadata to facilitate on-the-fly decompression of the kernel data.

In some embodiments, the neural processing unit includes a decompression unit including a plurality of decompression cores. During operation of the neural network, the kernel data is streamed from the onboard storage to the decompression unit. The decompression unit, including the multiple decompression cores, switches between the various decompression algorithms to properly decompress, on-the-fly, each portion of the kernel data in a lossless manner. The result is a neural processing unit that stores kernel data in a highly compressed manner and decompresses the kernel data during operation in a highly efficient manner.

In some embodiments, weight compression is applied per-layer, per-tensor, or per sub-tensor, according to the local weight distribution, with the capability to switch at runtime between decompression algorithms. Compression can be enabled (or not) according to the layer sparsity, as well as allowing to choose the compression algorithm that best fits the layer (or tensor, or sub-tensor) weights distribution. This provides a highly flexible and fine-grained compression solution.

Some embodiments provide a hardware implementation of the lossless decompression scheme. The lossless decompression hardware solution works on streaming data and addresses different types of lossless compression algorithms exploiting a programmable hardware that can be configured through metadata information embedded inside the compressed data stored in memory, which is streamed into the hardware at runtime.

In some embodiments provide a Variable Length Coding parallelization scheme that is exploited by the hardware to execute parallel decompression streams on a set of decompression cores. The compression algorithms can be applied in combination with a hardware design for vector quantized data to provide an even higher degree of compression while also maintaining the lossless feature. In some embodiments, the lossless decompression is applied on the quantization error, that can be reconstructed and added back to the quantized weight, providing a quasi-lossless decompression.

In some embodiments, a method includes storing, in a memory of a neural processing unit, compressed kernel data, receiving, with the neural processing unit, feature data, and streaming the compressed kernel data to a first decompression unit of the neural processing unit. The method includes generating decompressed kernel data from the compressed kernel data by decompressing the kernel data with a plurality of decompression algorithms and processing the feature data with the decompressed kernel data with the neural processing unit.

In some embodiments, a method includes passing a serialized stream of compressed kernel data from a memory of a neural processing unit to a first decompression unit of the neural processing unit and passing a first portion of the compressed kernel data to a first decompression core of the first decompression unit. The method includes passing a second portion of the compressed kernel data to a second decompression core of the first decompression unit and generating first decompressed serial data by decompressing the first portion of the compressed kernel data with the first decompression core implementing a first decompression algorithm. The method includes generating second decompressed serial data by decompressing the second portion of the compressed kernel data with the second decompression core implementing a second decompression algorithm. The method includes generating, with the first decompression unit, a serialized stream of decompressed kernel data by serializing the first decompressed data and the second decompressed data.

In some embodiments, a neural processing unit includes a first decompression unit. The first decompression unit includes a data parallelizer configured receive a serialized stream of compressed kernel data and a plurality of decompression cores coupled to the data parallelizer and each configured to receive, in parallel, a portion of the compressed kernel data and to generate a corresponding portion of decompressed kernel data. The first decompression unit includes a data serializer coupled to the decompression cores and configured to receive the portions of decompressed kernel data and to generate a serialized stream of decompressed kernel data.

In some embodiments, a method includes generating kernel data for a neural network by training the neural network with a machine learning process and selecting, for a first portion of the kernel data, a first data compression algorithm based on characteristics of the first portion of the kernel data. The method includes selecting, for a second portion of the kernel data, a second data compression algorithm based on characteristics of the second portion of the kernel data. The method includes generating compressed kernel data by compressing the first portion of the kernel data with the first compression algorithm, compressing the second portion of the kernel data with the second compression algorithm, and generating metadata indicating the first and second compression algorithms.

### BRIEF DESCRIPTION OF THE SEVERAL VIEWS OF THE DRAWINGS

Figure 1 is a functional block diagram of a process for training a neural network, and storing kernel data of the neural network, in accordance with some embodiments.
Figure 2 is an illustration of kernel data tensors with portions compressed in accordance with a plurality of sparsity-based compression techniques, in accordance with some embodiments.
Figure 3 is a block diagram of a neural processing unit, in accordance with some embodiments.
Figure 4 is a sequence of compressed kernel data, in accordance with some embodiments.
Figures 5A-5D are schematic diagrams of a decompression unit including a plurality of decompression cores during decompression of a sequence of compressed kernel data, in accordance with some embodiments.
Figures 6A and 6B are schematic diagram of a decompression unit, in accordance with some embodiments.
Figure 7 is a schematic diagram of a decompression core of the decompression unit, in accordance with some embodiments.
Figure 8 of a neural processing unit, in accordance with some embodiments.
Figure 9 of a neural processing unit, in accordance with some embodiments.
Figure 10A is a representation of vector quantized data, in accordance with some embodiments.
Figure 10B illustrates reconstruction of vector quantized kernel data, in accordance with some embodiments.
Figure 11 is a block diagram of a neural processing unit, in accordance with some embodiments.
Figure 12 is a block diagram of a neural processing unit, in accordance with some embodiments.
Figures 13A and 13B are schematic diagram of a decompression unit, in accordance with some embodiments.
Figure 14 is a flow diagram of a method for operating a neural network, in accordance with some embodiments.
Figure 15 is a flow diagram of a method for operating a neural network, in accordance with some embodiments.

### DETAILED DESCRIPTION

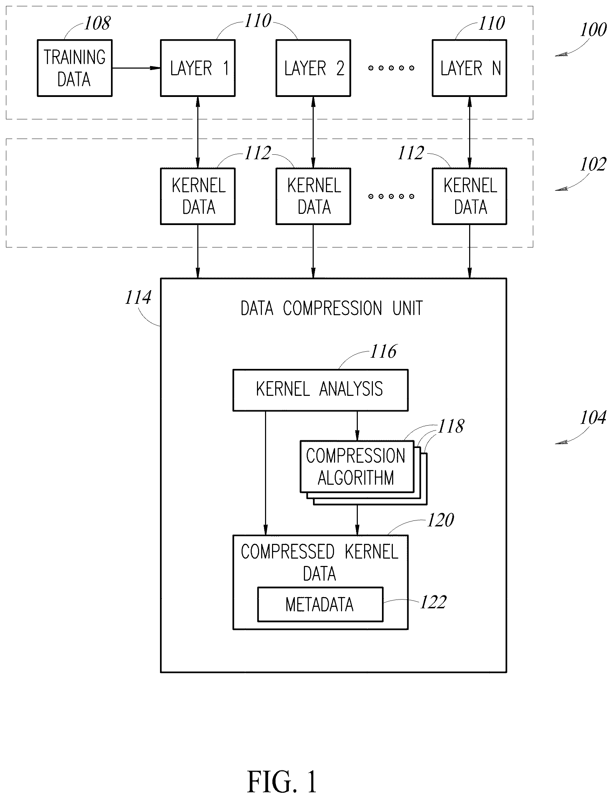

Figure 1 is a functional block diagram of a process for training a neural network, in accordance with some embodiments. At 100, training data 108 is utilized to train N layers 110 of a neural network. At 102, the training process generates kernel data 112 for each layer. At 104, a decompression unit 114 compresses the kernel data in accordance with a plurality of compression techniques. Further details regarding this process are set forth below.

In some embodiments, after training, the neural network will be implemented in a neural processing unit. The neural processing unit is part of an electronic device or an electronic system, in accordance with some embodiments. The neural processing unit includes onboard memory resources, hardware accelerators, stream switches, and other resources for implementing the neural network.

In some embodiments, the functions described in relation to Figure 1 are performed by a computing system that is separate from the neural processing unit. Typically, training a neural network is more expensive in terms of computing resources than operating a neural network that is already trained. Accordingly, the training of the neural network is done by a computing system that includes greater memory and processing resources than the neural processing unit. Alternatively, in some embodiments, at least a portion of the training is done in the neural processing unit.

In Figure 1, the computing system, that trains the neural network includes a data compression unit 114, in accordance with some embodiments. The data compression unit 114 is a module, application, or system implemented by the computing system to compress the kernel data 112 after training of the neural network.

As described previously, the neural processing unit in which the neural network will be implemented includes limited onboard storage, in accordance with some embodiments. Accordingly, it is beneficial to compress the kernel data 112 to reduce the amount of data stored in the onboard storage of the neural processing unit, or in external storage of the device associated with the neural processing unit. Compression of the kernel data 112 results in compressed kernel data 120 that consumes a smaller amount of memory than does the kernel data 112.

In some embodiments, the decompression unit 114 utilizes weights sparsity to compress the kernel data 112. More particularly, during training, the kernel data is generated in a manner to reduce the amount of non-zero weight values, thus increasing the number of zero weight values. The zero weight values can be exploited in compression of the kernel data 112. In particular, the compression takes advantage of the high number of zero weight values in the kernel data to decrease the amount of stored data.

In some embodiments, after training, the decompression unit induces further sparsity in the kernel data 112 in a process termed "pruning". During the pruning process, the data compression unit identifies weight values in the kernel data 112 that have nonzero values but that are very close to zero. For example, the data compression unit identifies nonzero weight values that have an absolute value that is less than a threshold value. In one example, the threshold value is 0.01, though other values can be utilized without departing from the present disclosure. The data compression unit changes these values to zero. This induces additional sparsity into the kernel data 112 that results in greater compression of the kernel data 112. The pruning process can introduce some amount of inaccuracy into the operation of the neural network. The size of the inaccuracy is proportional to the size of the threshold value. The smaller the threshold value, the smaller the induced inaccuracy.

After generation of the kernel data 112, at 116 the data compression unit 114 performs kernel analysis. More particularly, the kernel analysis is utilized to select a compression algorithm 118 from a plurality of compression algorithms. Each compression algorithm 118 is a weights sparsity compression algorithm, in accordance with some embodiments. The kernel analysis 116 determines, for each of a plurality of portions of the kernel data 112, which compression algorithm 118 is most suited for that portion of the kernel data 112.

In some embodiments, one of the compression algorithms 118 is a run-length coding (RLC) compression algorithm. In the RLC algorithm, the least significant bit (LSB) is utilized to specify the type of the weight. If the LSB is 0, the following 8 bits indicate the number of consecutive 0 weights in the kernel. If the LSB is 1, the following 8 bits are used to indicate a nonzero weight value.

The RLC algorithm has various benefits. For example, the RLC algorithm provides particularly good compression when sparsity is highly concentrated in some areas of the kernel data. The RLC algorithm can include 256 consecutive zeros with only 9 bits. The RLC algorithm includes a simple hardware implementation of both coder/encoder.

The RLC algorithm also has some drawbacks. For example, an additional bit is utilized to encode a non-zero value. The RLC algorithm is also highly dependent on the distribution of zero weights. Accordingly, the RLC algorithm can be highly beneficial in some instances and less beneficial in other instances, depending on the distribution of zero weights in the kernel data 112.

For the RLC compression algorithm, there is not a simple direct relation between sparsity and compression. The compression depends on the probability of sequences of consecutive zeros. Given a sequence of N kernels in a layer, it is possible to compute the number of series of consecutive zero weights that are to have a valid compression (i.e., compressed size is less than uncompressed size). More particularly, compression is valid if the following relationship is true: $9 ∗ {\sum }_{i = 1}^{256} {s}_{i} > {tot}_{zero} ∗ 8 - {tot}_{nonzero} ,$ where *sᵢ* is the number of i-long zero sequences in a portion of kernel data, *tot_{nonzero}* is the total number of non-zero weights in the portion of kernel data, and *tot_{zero}* is the total number of zero weights.

In some embodiments, one of the compression algorithms 118 is a Zero Huffman Coding (ZHC) algorithm. The ZHC algorithm can be likened to a Huffman classifier with only 2 classes. Class 0 indicates a zero weight and is encoded with a single bit (0). Class 1 indicates a nonzero weight and is encoded with 9 bits in which the LSB is the class (1) and the remaining 8 most significant bits (MSB) bits are the weight value.

The ZHC compression has various benefits. For example, the ZHC compression does not rely on the distribution of 0 weights (i.e., the number of consecutive zero weights), but only on the overall sparsity value (the total number of zero weights). Additionally, ZHC includes a simple hardware implementation of both coder/encoder.

The ZHC compression also has some drawbacks. For example, ZHC compression is less efficient than RLC compression when there are high numbers of consecutive zero weights.

In some embodiments, one of the compression algorithms 118 is a Zero Value Compression (ZVC) algorithm. In the ZVC algorithm, an N-size is used to indicate the type (zero or non-zero) of the upcoming N-weights. For example, if bitᵢ is 0, then weight i is zero. If bitᵢ is 1, then weight i is non-zero. After the N-size mask, only the non-zero weights are provided.

The ZVC compression algorithm has various benefits. For example, the DC algorithm does not rely on the distribution of zero weights. The impact of zero weight is limited to M bits every N weights. Furthermore, the mask size is adaptable to the weight distribution.

The ZVC compression algorithm also has some drawbacks. For example, the hardware implementation is more complex than the hardware implementation of RLC and ZHC compression algorithms as the mask is decoded. There is an N-bit mask overhead every N weights.

For the ZHC and ZVC compression algorithms, the overall compression is the sparsity value minus 0.125, where the sparsity value is the ratio of the number of zero weights to non-zero weights in a portion of kernel data 112. Accordingly, compression with ZHC and ZVC is only beneficial for a portion of kernel data if the sparsity is greater than 12.5%.

Returning to Figure 1, the data compression unit 114 can be implemented at the compiler level. The kernel analysis 116 determines, for each portion of the kernel data 112, whether that portion of data should be compressed (i.e., if compression will reduce the data size for that portion of the kernel data), and, if compression is beneficial, which compression algorithm to utilize.

In some embodiments, the kernel analysis 116 selects the compression algorithm (or no compression) on a per-layer basis. In this case, the kernel data 112 associated with each layer 110 is either not compressed or is compressed with a single compression algorithm. Different layers can be compressed with different compression algorithms.

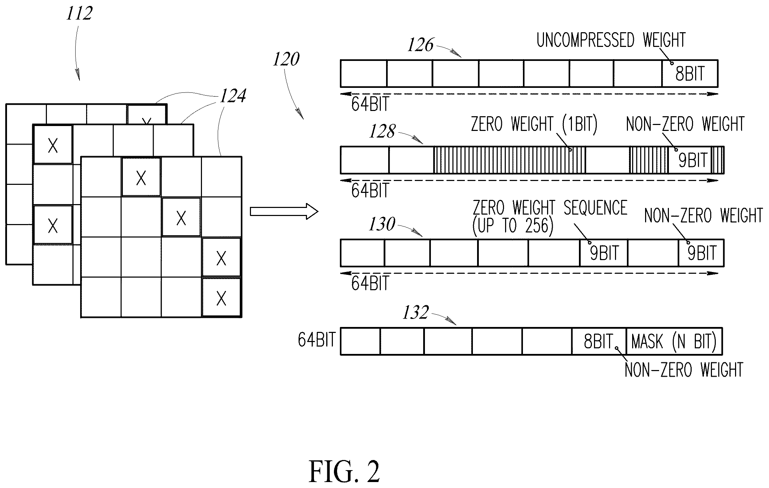

In some embodiments, the kernel analysis 116 selects the compression algorithm (or no compression) for each tensor of the kernel data 112. Further details regarding tensors are provided in relation to Figure 2. The kernel data 112 for each layer 110 can be arranged in a plurality of tensors. In this case, the kernel data 112 associated with each tensor is either not compressed or is compressed with a single compression algorithm. Different tensors can be compressed with different compression algorithms.

In some embodiments, the kernel analysis 116 selects the compression algorithm (or no compression) for each sub-tensor of the kernel data 112. Each tensor can be divided into a plurality of sub-tensors of selected size. In this case, the kernel data 112 associated with each sub-tensor is either not compressed or is compressed with a single compression algorithm. Different sub-tensors of a single tensor can be compressed with different compression algorithms.

After performing the kernel analysis 116, and selecting among the compression algorithms 118 for the different portions of the kernel data 112, the data compression unit 114 performs compression of the kernel data 112. This results in compressed kernel data 120. As described previously, in some embodiments, some portions of the kernel data 112 are compressed and other portions of the kernel data 112 are not compressed. The compressed portions and the uncompressed portions are stored together as the compressed kernel data 120.

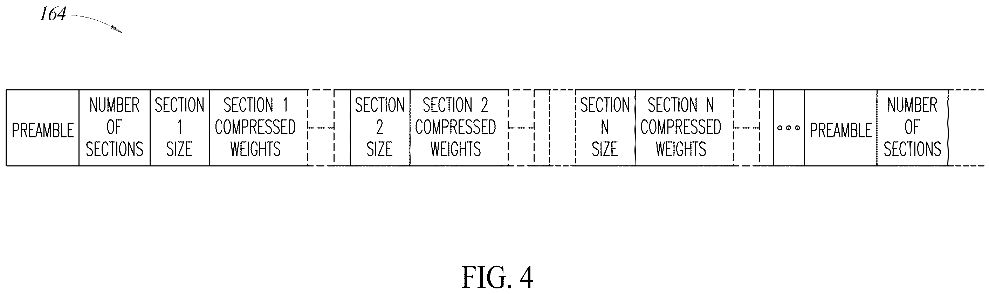

In some embodiments, the data compression unit 114 generates metadata 122 with the compressed kernel data 120. The structure of the compressed kernel data 120, together with the metadata 122, allows for highly efficient decompression of the compressed kernel data 120 by a neural processing unit. In particular, the structure of the compressed kernel data 120 and the metadata 122 enables runtime switching between the compression algorithms. In other words, as the compressed kernel data 120 is passed from the local storage of a neural processing unit to a decompression unit of the neural processing unit, the decompression unit can switch between the compression algorithms on the fly as the compressed kernel data 120 is streamed to the decompression unit. Further details regarding the metadata 122 and the structure of the compressed kernel data 120 will be provided in relation to Figure 4.

Figure 2 is an illustration of a portion of kernel data 112 arranged as tensors 124. Tensors are similar to matrices in that they include a plurality of rows and columns with data values in the various data fields. In the example of kernel data 112 stored as tensors 124, each data field of the tensors corresponds to a weight value of the kernel data 112.

In the example of Figure 2, data fields with an X represent non-zero value weights. Blank data fields represent zero-value weights. In Figure 2, the tensors 124 are represented as 4x4 tensors for the sake of simplicity. However, in practice, each tensor 124 has tens, hundreds, or thousands of rows and columns, in accordance with some embodiments.

In some embodiments, each tensor 124 corresponds to the kernel data 112 for a layer 110. In some embodiments, a plurality of tensors 124 corresponds to the kernel data 112 for a layer 110.

As described previously in relation to Figure 1, the kernel analysis 116 analyzes the tensors 124 of the kernel data 112 to select whether or not to compress and which compression algorithm to utilize. In some embodiments, this analysis is performed for each tensor. In some embodiments, the analysis is performed for a plurality of sub-tensors of each tensor 124. In other words, the analysis is performed for sub-tensors of selected size to determine whether to compress and which compression algorithm to utilize.

Figure 2 illustrates the compressed kernel data 120 generated from the tensors 124, in accordance with some embodiments. Figure 2 illustrates a first portion 126 corresponding to an uncompressed portion of the kernel data 112. Figure 2 illustrates a second portion 128 of the kernel data 112 compressed with an RLC compression algorithm. Figure 2 illustrates a third portion 130 of the kernel data 112 compressed with a ZHC compression algorithm. Figure 2 illustrates a fourth portion 132 of the kernel data 112 compressed with a ZVC compression algorithm. Other compression algorithms can be utilized without departing from the scope of the present disclosure.

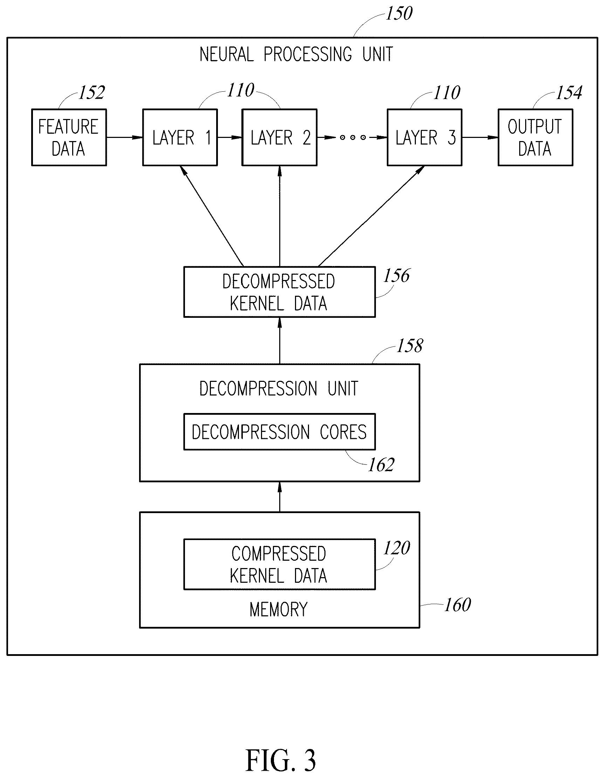

Figure 3 is a block diagram of a neural processing unit 150, in accordance with some embodiments. The neural processing unit 150 is a hardware architecture or circuit structure implemented in an electronic device. In some embodiments, the neural processing unit 150 is implemented in a single integrated circuit.

The neural processing unit 150 includes an onboard memory 160. The onboard memory 160 stores the compressed kernel data 120. The compressed kernel data 120 includes portions compressed with multiple different compression algorithms. In some embodiments, the compressed kernel data 120 also includes portions that are uncompressed. The compressed kernel data 120 represents compressed kernel data generated after training of a neural network, as described in relation to Figures 1 and 2.

The neural processing unit 150 includes a decompression unit 158. During operation of the neural network 150, the compressed kernel data is passed from the memory 160 to the decompression unit 158. The decompression unit 158 decompresses the compressed kernel data to generate decompressed kernel data 156. In some embodiments, the decompression unit 158 switches between multiple decompression algorithms on the fly to decompress the various portions of the compressed kernel data 120 that had been compressed in accordance with the multiple compression algorithms. As used herein, each decompression algorithm corresponds to a particular compression algorithm. For example, an RLC decompression algorithm is utilized to decompress data that has been compressed with an RLC compression algorithm. A ZHC decompression algorithm is utilized to decompress data that has been compressed with a ZHC compression algorithm. A ZVC decompression algorithm is utilized to decompress data that has been compressed with a ZVC compression algorithm. In some embodiments, the decompression unit 158 is a lossless decompression unit.

In some embodiments, the decompression unit 158 includes a plurality of decompression cores 162. Each decompression core 162 can be configured on the fly to decompress a portion of the compressed kernel data 120, in accordance with a selected decompression algorithm. The decompression cores 162 are lossless decompression cores in that the decompression cores accurately reproduce the original kernel data 112 from the compressed kernel data 120.

In some embodiments, as the compressed kernel data 120 is streamed in a serialized stream to the decompression unit 158, the various portions of the compressed kernel data 120 are passed to the decompression cores 162 in a parallel manner. Each decompression core 162 decompresses a portion of the compressed kernel data 120 utilizing the appropriate decompression algorithm. As each portion is decompressed, the decompressed portions are then serialized into a serial stream of decompressed kernel data 156. In some embodiments, the decompressed kernel data 156 is lossless. In other words, the decompressed kernel data 156 is identical to the kernel data 112. Further details regarding the decompression unit 158 and the decompression cores 162 are provided below.

The block diagram of Figure 3 illustrates the neural processing unit 150 during operation or implementation of the neural network associated with the neural processing unit 150. In particular, feature data 152 is provided to the neural processing unit 150. The feature data 152 corresponds to the input data that is provided to the neural processing unit 150 for classification or other types of processing. As the feature data 152 is provided to the first layer 110, decompressed kernel data 156 associated with the first layer is also streamed to the first layer. The first layer then processes the feature data 152, in accordance with the decompressed kernel data 156. The processed feature data is then passed from the first layer to the second layer. The decompressed kernel data 156 associated with the second layer is also streamed to the second layer. The second layer then processes feature data in accordance with the decompressed kernel data. This continues until the feature data is processed by the Nth layer 110, in accordance with the corresponding decompressed kernel data 156 associated with the Nth layer. The output of the Nth layer is the output data 154. The output data 154 is a classification, in some embodiments. Other types of output data can be utilized without departing from the scope of the present disclosure.

In some embodiments, the neural processing unit 150 implements a deep neural network. The deep neural network can include convolution operations, pooling operations, activation operations, arithmetic operations, and other types of operations. For simplicity, the simplified block diagram of Figure 3 does not illustrate the various hardware accelerators utilized to perform the functions of the neural network. Accordingly, the neural processing unit 150 can include other architectures, circuit structures, and processes without departing from the scope of the present disclosure.

Figure 4 is an illustration of a sequence 164 of compressed kernel data 120, in accordance with some embodiments. The sequence 164 of compressed kernel data 120 is output from the memory 160. As a serialized stream of the compressed kernel data 120. The sequence 164 includes N sections of compressed weights interspersed with various types of metadata 122, as will be described in further detail below.

In some embodiments, each section of compressed weights corresponds to a portion of kernel data 112 compressed with a particular compression algorithm, or with no compression at all. Accordingly, though the various sections are labeled as "compressed weights", in practice, some of the sections include uncompressed weights, in accordance with some embodiments.

In some embodiments, the sequence 164 begins with a preamble. The preamble is a portion of metadata 122 providing some information about the sequence 164. In one example, the preamble includes a first bit indicating whether or not the sequence 164 includes compressed data values. The preamble includes one or more bits indicating the type of compression. If the first bit indicates no compression, then the remaining bits of the preamble can be ignored. If the first bit indicates compression, the remaining bits indicate the type of compression (e.g., RLV, ZVC, or ZHC). As set forth previously, other compression algorithms can be utilized without departing from the scope of the present disclosure.

In some embodiments, after the preamble, the sequence 164 includes metadata indicating the number of sections in the sequence 164. This value includes N bits, where a maximum number of sections is 2^{N} sections.

In some embodiments, after the number of sections, the sequence 164 includes metadata indicating a size of the first section. In some embodiments, the section size includes M bits, where a maximum number of bits in the section is 2^{M}.

After the section size metadata, the sequence includes the first section of compressed kernel data 120. The first section of compressed kernel data 120 includes compressed values. The first section of compressed kernel data 120 has been compressed with the compression algorithm indicated in the preamble.

After the first section of compressed kernel data 120, the sequence includes second section size metadata indicating the size of the next section of metadata. The second section of compressed kernel data 120 follows the second section size metadata. This continues until the Nth section of compressed kernel data 120. The end of the Nth section of compressed kernel data 120 is the end of the sequence 164. In some embodiments, a next sequence 164 then begins with a preamble, as described previously.

Figure 3 illustrates that each sequence, 164 includes sections of compressed kernel data having been compressed with a same compression algorithm (or no compression at all). However, in some embodiments, each sequence, 164 can include sections that have been compressed with different compression algorithms. Thus, in some embodiments, a first section can include compressed kernel data compressed with a first compression algorithm, a second section can include compressed kernel data compressed with a second compression algorithm, and so forth.

Referring to Figures 3 and 4, in some embodiments, the compressed kernel data 120 is streamed in a serialized stream of sequences 164 of compressed kernel data 120. When the decompression unit 158 receives the serial stream of compressed kernel data 120, the decompression unit reads, the preamble and the number of sections. The decompression unit 158 ascertains the decompression algorithm and configures the decompression cores 162 to be able to decompress the compressed kernel data 120 with the appropriate decompression algorithm. The decompression unit then reads the size of the first section and passes the first section of compressed weights to a first decompression core 162. The second section of compressed weights is passed to a second decompression core 162, and so forth. Accordingly, in some embodiments, the serial stream of compressed kernel data is parallelized in a plurality of decompression cores 162.

In some embodiments, as each decompression core 162 finishes decompressing a section of compressed kernel data 120, the decompression unit 158 serializes each portion of the compressed kernel data 156. In this manner, the decompression unit 158 generates a serialized stream of decompressed kernel data.

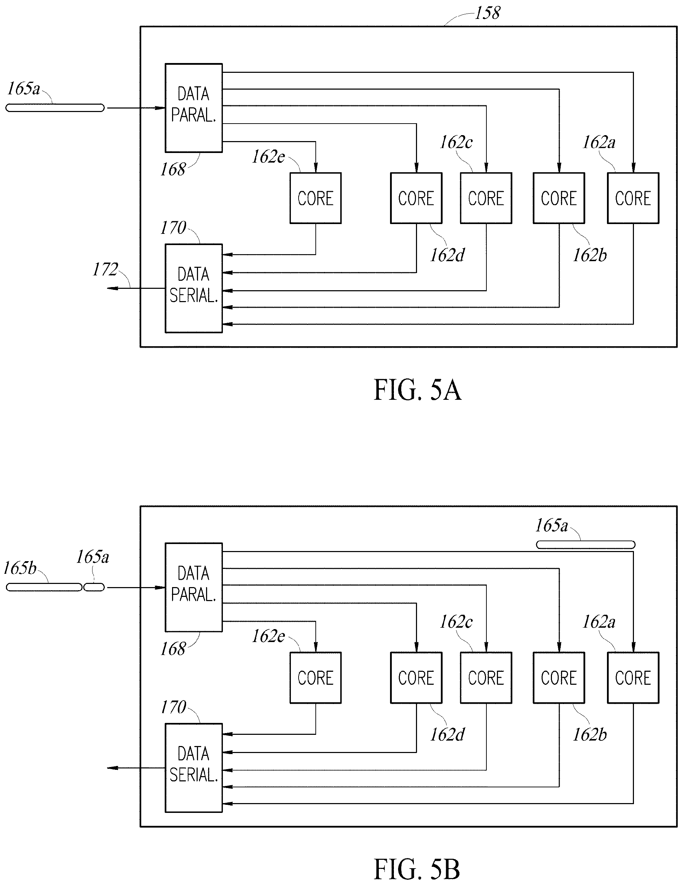

Figures 5A-5D include a simple block diagram of a decompression unit 158 at various stages of a decompression process, in accordance with some embodiments. In Figure 5A, a first section 165a of a sequence 164 of serialized compressed kernel data is received at a decompression unit 158. A data parallelizer 168 receives the first portion of the sequence 164, reads, the preamble and the number of sections 165, and configures the first decompression core 162a to decompress the second 165a of compressed kernel data 120, in accordance with the compression algorithm indicated in the preamble.

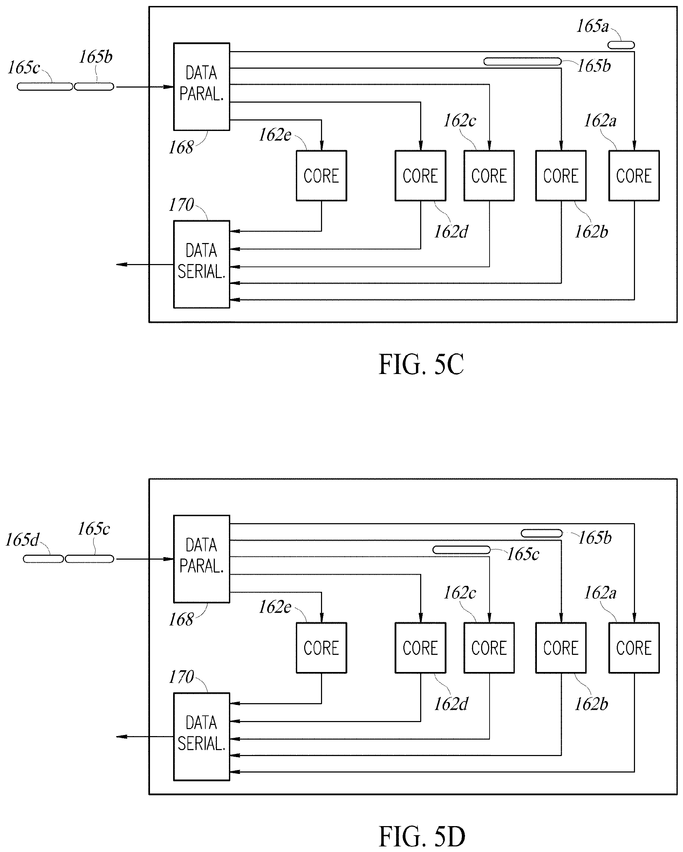

In Figure 5B, the first section 165a is passed to the core 162a. A second section 165b of the sequence 164 is about to be received at the data parallelizer 168. In Figure 5C, the second section 165b is passed to the second core 162b. The decompression unit 158 has configured the second core 162b to decompress the section 165b of compressed kernel data in accordance with the decompression type indicated in the preamble. As can be seen in Figure 5C, the cores 162a and 162b are decompressing kernel data in parallel to each other. A third section 165c of the sequence 164 is about to be received.

In Figure 5D, the third section 165c is passed to the third core 162c. The decompression unit 158 has configured the third core 162c to decompress the section 165c of compressed kernel data in accordance with the decompression type indicated in the preamble. As can be seen in Figure 5D, the cores 162a-c are decompressing kernel data in parallel to each other. A fourth section is about to be received.

As each core 162 finishes decompressing the sections 165 of compressed kernel data, the corresponding sections of decompressed kernel data are output to the data serializer 170. The data serializer 170 joins the parallel sections of decompressed kernel data into a serialized stream of decompressed kernel data 156. The serialized stream of decompressed kernel data includes sections are portions of decompressed kernel data in a same order as in the stream of compressed kernel data.

After the sequence 164 has been received and decompressed, another sequence 164 of the stream of kernel data received at the decompression unit 158. The decompression unit 158 reads, the preamble and determines the type of compression for the sections one 65 of the sequence 164. If the type of compression is the same as the previous sequence, then the decompression unit 158 does not need to change the decompression type of the cores 162. If the type of compression is different from the previous sequence, then the decompression unit 158 reconfigures the cores 162 on the fly to decompress the incoming sections of kernel data in accordance with the compression type indicated by the preamble of the newly received sequence.

In some embodiments, a sequence of kernel data 112 can include sections of kernel data having different compression types. The preamble can indicate the compression type of section. The decompression unit 158 then configures the cores 162, in accordance with the various compression types of the sections. The cores 162 can then each decompressed a section of the kernel data using a respective decompression algorithm.

In some embodiments, switching among different decompression algorithms happens on the fly. Switching can be applied based on counting the amount of data that have been streamed. The decompression unit 158 is not limited to an input/output width of 64 bits, as this is a parameter that can be defined at design time. Decompression is parallelized to meet input/output bandwidth. Layer/tensor/subtensor decompression can be skipped if no compression is applied. Multiple lossless decompression cores 162, or even decompression units 158, can be instantiated at system level to execute parallel weight streams decompression.

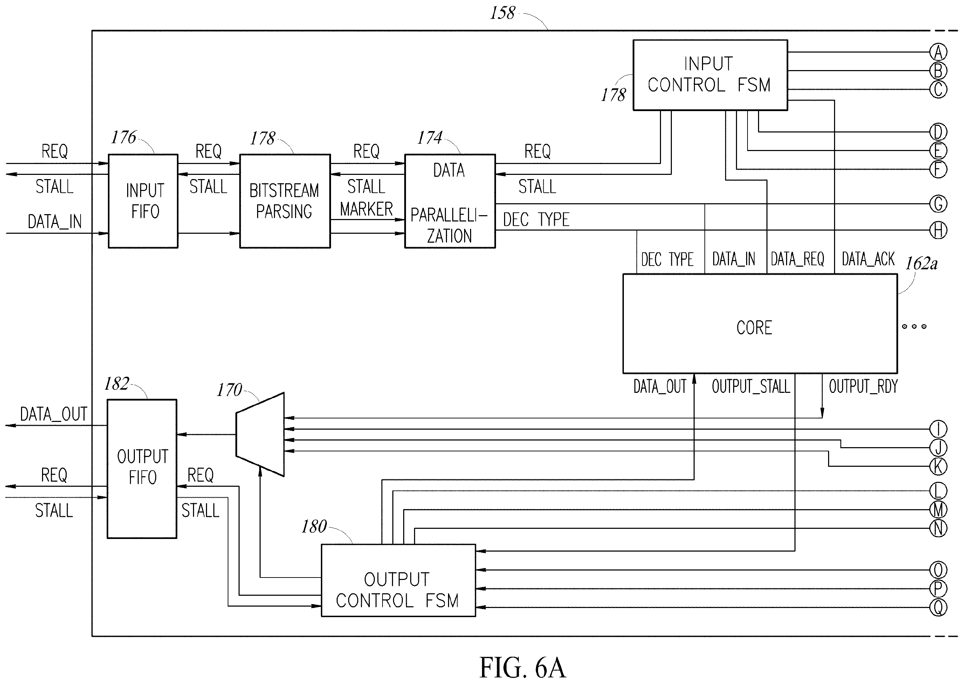

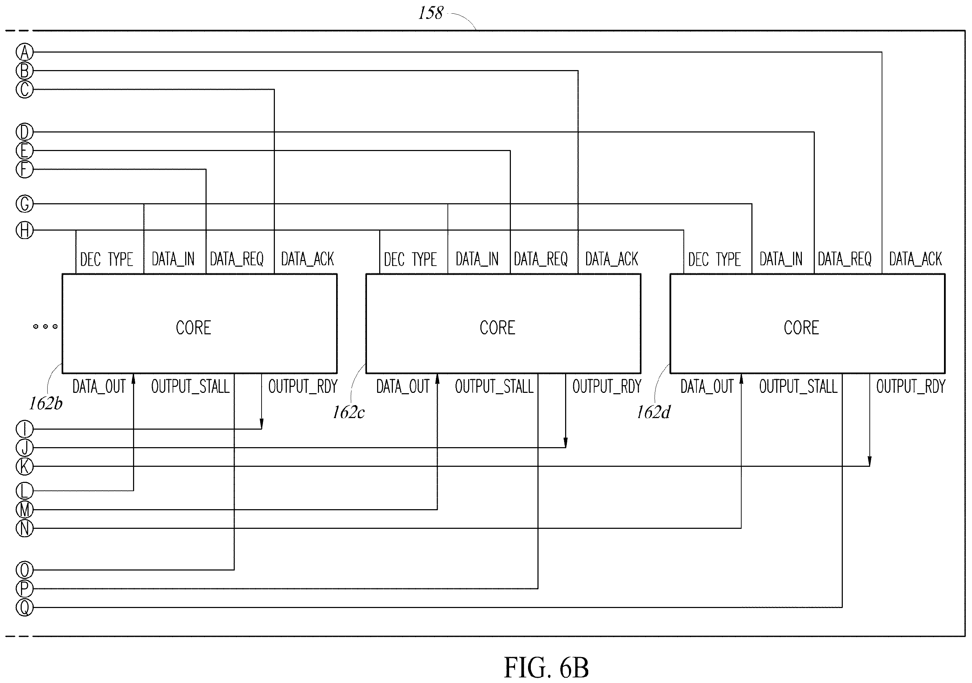

Figures 6A and 6B collectively correspond to a schematic diagram of a decompression unit 158, in accordance with some embodiments. A first portion of the decompression unit 158 is shown in Figure 6A. A second portion of the decompression unit 158 is shown in Figure 6B. Figure 6A and 6B will be described together.

The decompression unit 158 includes an input FIFO 176, a bitstream parser 178, a data parallelizer 174, an input control finite state machine 178, and a plurality of decompression cores 162a-d, in accordance with some embodiments. A compressed kernel data is received at the data input of the input FIFO 176. A command REQ is also received at the input FIFO 176. The stream of compressed kernel data is passed from the input FIFO parser 178. The bitstream parser 178 reads and parses the metadata 122 of the stream of compressed kernel data, particular the initial mask containing the streams sizes info. The bitstream parser passes the compressed kernel data and marker data to the data parallelizer 174. The input control finite state machine 178 receives the command REQ and provides a command DATA_REQ to each of the cores 162a-d. The input control finite state machine 178 receives a signal DATA_ACK from each of the cores 162a-d. The input control finite state machine can also pass a STALL command to stall the serialized stream of compressed kernel data.

The data parallelizer 174 passes the sequences or sections of compressed kernel data to the cores 162a-d, as described in relation to Figures 4 and 5A-5D. The data parallelizer 174 also passes the decompression type associated with each section or sequence of compressed kernel data to the decompression cores 162a-d in a parallel manner. The data parallelizer 174 is implemented as a set of counters that count the number of Bytes/bits sent to each decompression core 162. A control unit is responsible for steering the streams to the correct decompression core 162, according to the stream size count. The decompression cores 162a-d decompress the kernel data in accordance with the compression algorithm indicated.

In some embodiments, the input control finite state machine 178 is responsible to handle REQ/ACK data transactions between the data parallelizer 174 and the lossless decompression cores 162.

The decompression unit 158 includes an output control finite state machine 180, a multiplexer 170 (corresponding to a data serializer), and an output FIFO 182. The output control finite state machine 180 passes a signal DATA_OUT to each of the cores 162a-d and receives a signal OUTPUT_STALL from each of the cores 162a-d. Each of the cores 162a-d provides decompressed kernel data (OUTPUT_RDY) to the multiplexer 170. The multiplexer, under control of the output control finite state machine 180, receives the sections of decompressed kernel data in parallel and outputs them in a serialized stream of decompressed kernel data to the output FIFO 182. The output FIFO 182 provides serialized stream of decompressed kernel data. The output FIFO 182 also outputs the command REQ and can receive a STALL command to be passed to the OUTPUT CONTROL FSM 180. Other configurations of the decompression unit 158 can be utilized without departing from the scope of the present disclosure.

In some embodiments, the output serializer module is responsible for serializing the core output streams into a single stream of data. The serialization accounts for the expected data ordering, according to the signals propagated from the decompression cores.

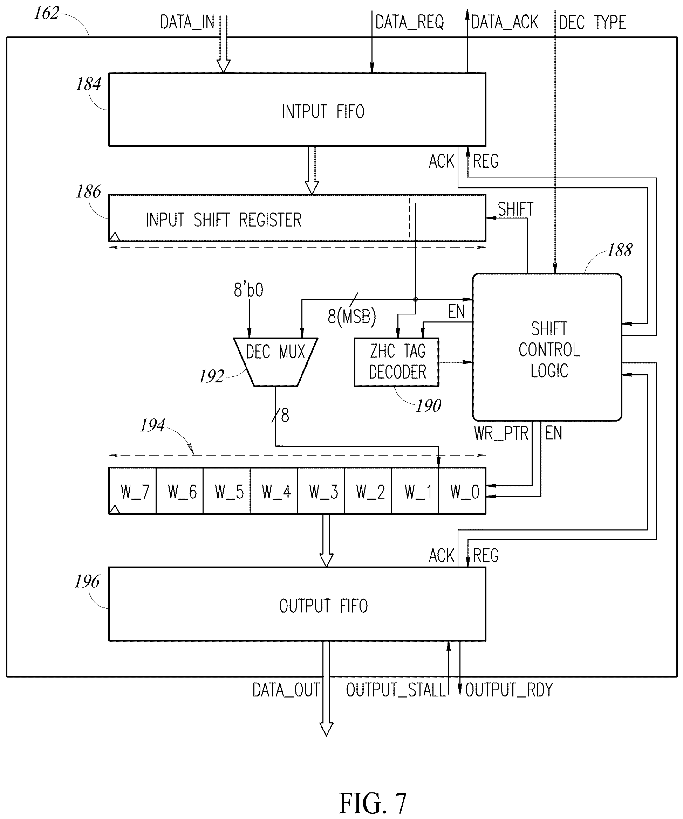

Figure 7 is a schematic diagram of a decompression core 162, in accordance with some embodiments. The decompression core 162 of Figure 7 is one example of the decompression cores 162 of Figures 3, 5, and 6A-6B. The decompression core 162 includes an input FIFO 184, and input shift register 186, and a shift control logic 188. The decompression core 162 also includes a ZHC TAG decoder 190, a DEC MUX 192, a register 194, and an output FIFO 196, in accordance with some embodiments.

In some embodiments, the decompression core 162 can be programmed to define the desired decompression algorithm, ZVC, ZHC, RLC, etc. The decompression type is received from the data parallelizer.

In some embodiments, the input FIFO 184 is used to absorb incoming compressed weights stream data. This is beneficial when the stream section is longer than 64 bits, to allow data parallelization with other decompression cores 162.

In some embodiments, the input shift register 188 contains the incoming weight stream data. The 9 LSBs are read and decompressed according to the chosen compression algorithm. For ZVC, ZHC, RLC, the multiplexer 192 is used to choose between an 8 bit '0 value (in case a zero weight is decoded) or the non-zero weight (directly taking the 8 most significant bits).

In some embodiments for ZHC algorithm, the tag decoder unit 190 is used to decode the initial tag, and the information is then sent to the shift control logic 188.

In some embodiments, the shift control logic 188 is responsible for regulating the input FIFO 196 reads (REQ/ACK). The shift control logic 188 is responsible for shifting the input shift register once a weight has been decoded. The shift control logic 188 is responsible for communicating with the external input parallelization unit to handle incoming stream of weights (REQ/ACK). The shift control logic 188 is responsible for handling the output data generation. The shift control logic 188 is responsible for rregulating the output FIFO 196 reads (REQ/ACK).

In some embodiments, the output 64 bit register 194 stores the 8-bit decoded weights before being sent to the output serialization stage.

In some embodiments, the output FIFO 196 is used to absorb decompressed weights streams of data.

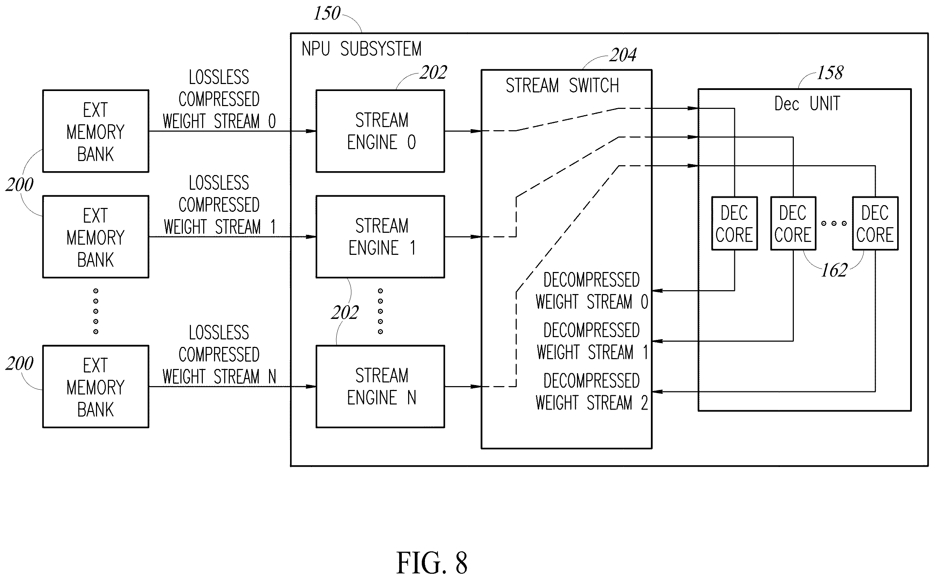

Figure 8 is a block diagram of a neural processing unit 150, in accordance with some embodiments. The neural processing unit 150 is coupled to a plurality of external memory banks 200. The neural processing unit 150 includes a plurality of stream engines that each receive a respective stream of lossless compressed kernel data from a respective external memory bank 200. Each stream engine 202 is coupled to a stream switch 204. The stream switch 204 couples each of the stream engines 202 to a respective decompression core 162 of the decompression unit 158. Each decompression core generates decompressed kernel data and provides the decompressed kernel data back to the stream switch 204. Though not shown in Figure 8, each of the streams of decompressed kernel data is then passed to other hardware accelerators to perform the processing associated with each layer of the neural network.

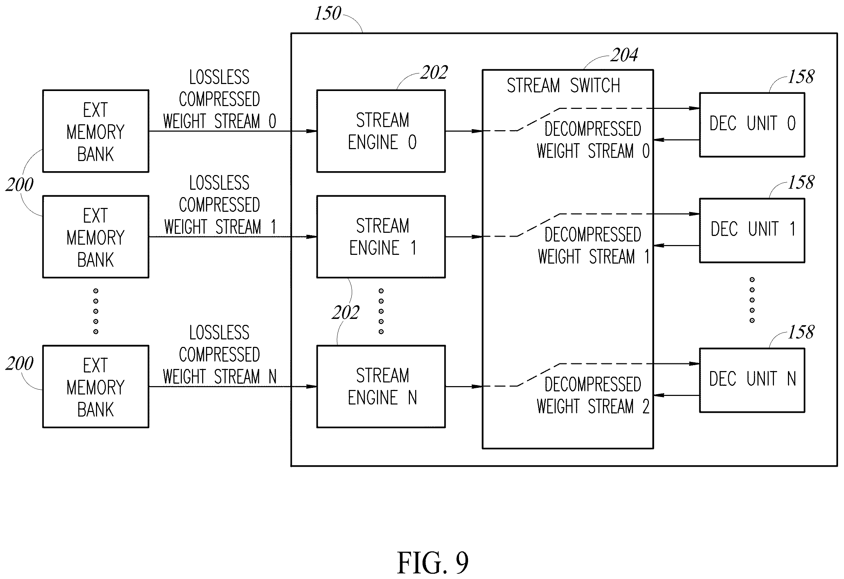

Figure 9 is a block diagram of a neural processing unit 150, in accordance with some embodiments. The neural processing unit 150 is substantially similar to the neural processing unit 150 of Figure 8, except that the neural processing unit 150 includes a plurality of decompression units 158. Each decompression unit 158 receives a stream of compressed kernel data and outputs, a stream of decompressed kernel data. Each decompression unit 158 can be independently programmed to execute independent decompression algorithms. Each decompression unit 158 executes a decompression workload on an independent input weight stream. This allows a finer grain of decompression parallelization. In some embodiments, each decompression unit 158 includes multiple decompression cores 162.

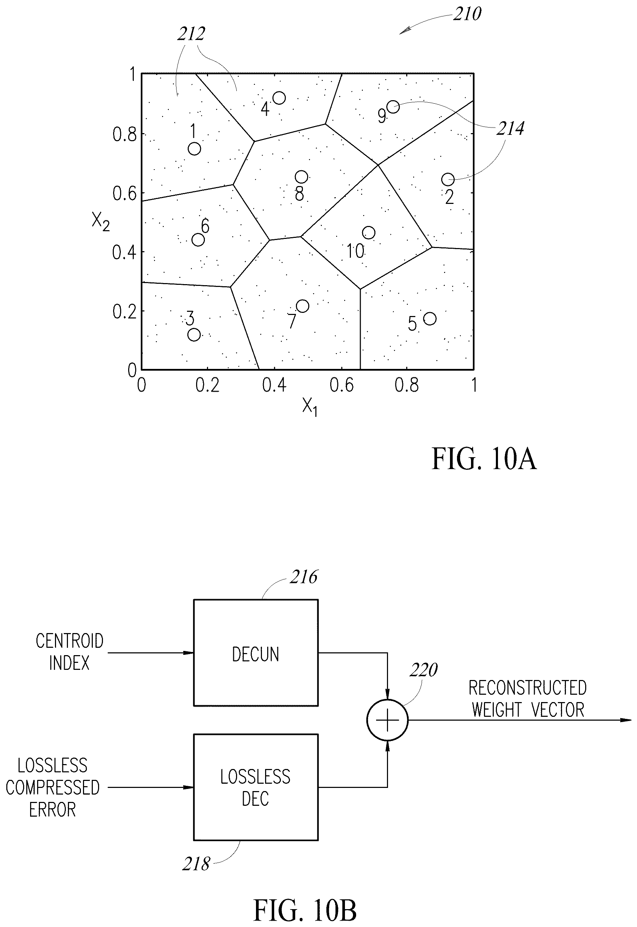

Figure 10A is an illustration of a vector quantization map 210, in accordance with some embodiments. The map 210 includes a plurality of quantization sectors 212. In the example of Figure 10A, there are 10 sectors. Each sector includes a centroid (labeled 1-10 in Figure 10A). Vector quantization is applied to a set of weights from the kernel data 112. Each weight is represented by the centroid of the sector in which the weight falls. This is a lossy representation of the weight. Later, as will be described in more detail, lossy decompression as applied to retrieve the quantized weights vector. Lossless decompression is applied to the quantization error information to reconstruct the quantization error vector. The original weight vector is reconstructed by adding the quantized weight vector to the quantization error vector leading to quasi-lossless compression.

Figure 10B illustrates the quasi-lossless decompression, in accordance with some embodiments. Centroid index values are provided to the decompression unit 216 (DECUN). The decompression unit 216 reads each centroid value and returns a decompressed quantized weight vector indexed by the centroid index. The decompression unit 216 can include a lookup table that includes a decompressed quantized weight vector for each index value.

The lossless compressed weight error values are provided to the lossless decompression unit 218. The lossless decompression unit 218 decompresses the compressed weight error values and outputs, corresponding decompressed weight error values. The original weight vector is reconstructed by adding the quantization error vector to the corresponding quantized weight vector with the adder 220, leading to quasi-lossless decompression.

The combination of vector quantization and lossless decompression provides various benefits. For example, vector quantization results in higher compression with respect to lossless compression algorithms alone. Thus, the compressed weights have lower memory footprint, as well as leading to a reduction in power consumption and bandwidth requirements for weights retrieval. Lossless compression can increase weight decompression accuracy, i.e. the final decompressed weights are closer to the original weight values (before vector quantization), leading to an increase in inference accuracy. The decompression bandwidth is not affected as the two decompression streams can be executed in parallel.

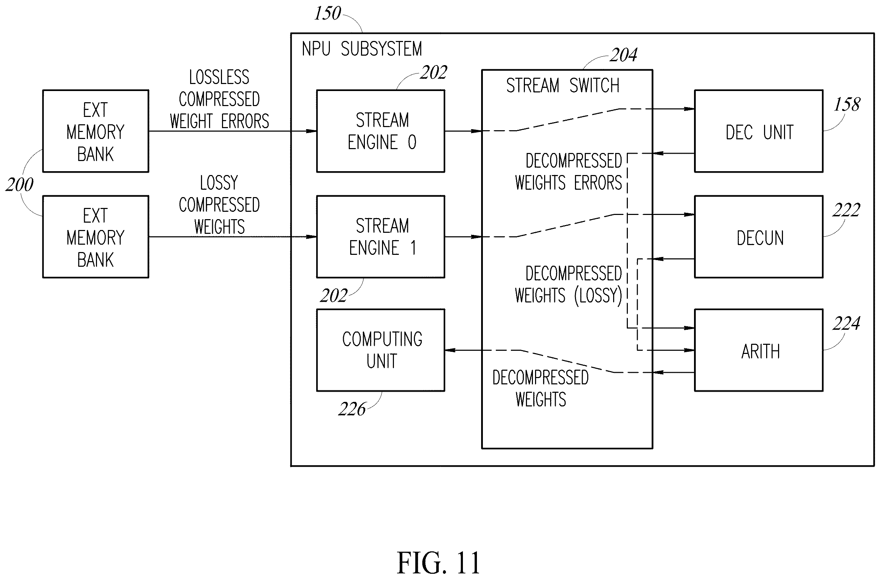

Figure 11 is a block diagram of a neural processing unit 150, in accordance with some embodiments. The neural processing unit 150 of Figure 11 utilizes principles described in relation to Figures 10A and 10B, as well as previous figures, in accordance with some embodiments. A first external memory bank 200 provides lossless compressed weight error values to a first stream engine 202. The lossless compressed weight error values are provided via the stream switch 204 to a lossless decompression unit 158. A second external memory bank 200 provides lossy compressed weights (centroid values) to a second stream engine 202. The stream switch 204 provides the lossy compressed weights to the vector decompression unit (DECUN) 222. The lossless decompression unit 158 provides the compressed weight errors to an arithmetic unit 224. The vector quantization unit 222 provides lossy decompressed weights to the arithmetic unit 224. The arithmetic unit 224 provides quasi-lossless decompressed weights to the computing unit 226. In some embodiments, the arithmetic unit 224 is a hardware accelerator that adds to streams of data, accessed via the stream switch.

In some embodiments, at system level, the lossless decompression unit 158 and DECUN 222 unit are instantiated as independent IPs inside the neural processing unit subsystem 150 and connected to input stream engines 202 through a reconfigurable streaming dataflow network, stream switch 204. The recombination of the decompressed quantization error and decompressed weight can be executed inside a dedicated arithmetic unit 224, which ultimately generates the reconstructed decompressed weights to be sent to a computation unit, computing unit 226. In some embodiments, the computing unit 226 includes a digital in-memory computing unit (DIMC) In some embodiments, the weights can be stored in memory, to allow the computing unit to execute a convolution operation using the decompressed weights. Accordingly, in some embodiments, the computing unit 226 is a convolutional accelerator for a neural network.

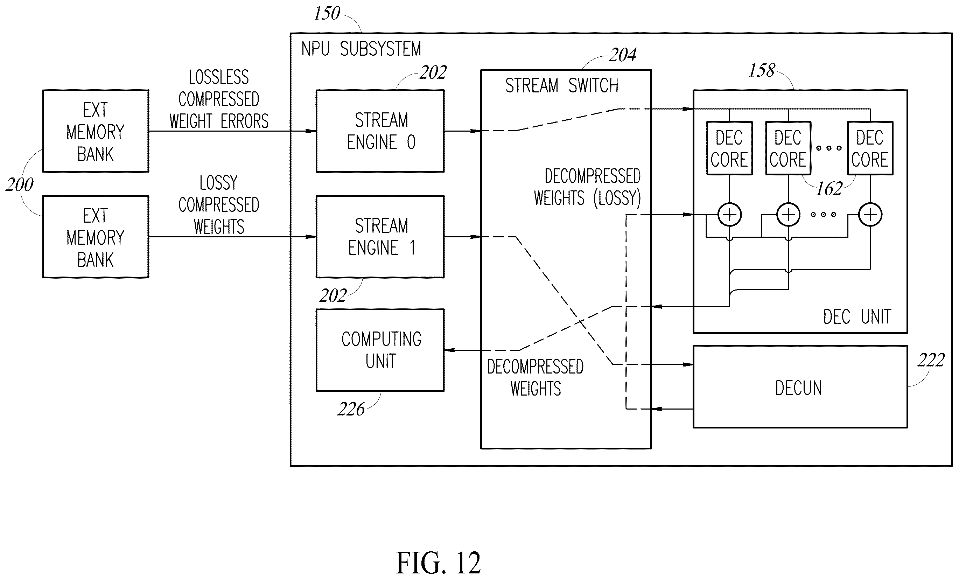

Figure 12 is a block diagram of a neural processing unit 150, in accordance with some embodiments. The neural processing unit 150 of Figure 12 is substantially similar to the neural processing unit 150 of Figure 11 in many regards. In Figure 12, the lossless decompression unit 158 includes a plurality of decompression cores 162 that each decompressed sections of the compressed weight errors. Decompressed weights are provided from the DECUN 222 to adders of the decompression unit 158 to generate decompressed weights to be provided to the DIMC 226.

Accordingly, in some embodiments, the recombination takes place within the lossless decompression unit 158, where dedicated adders are used to recombine the decompressed quantization error and the decompressed weight. In this case, an additional input stream link is utilized within the decompression unit 158 to receive data from DECUN 222.

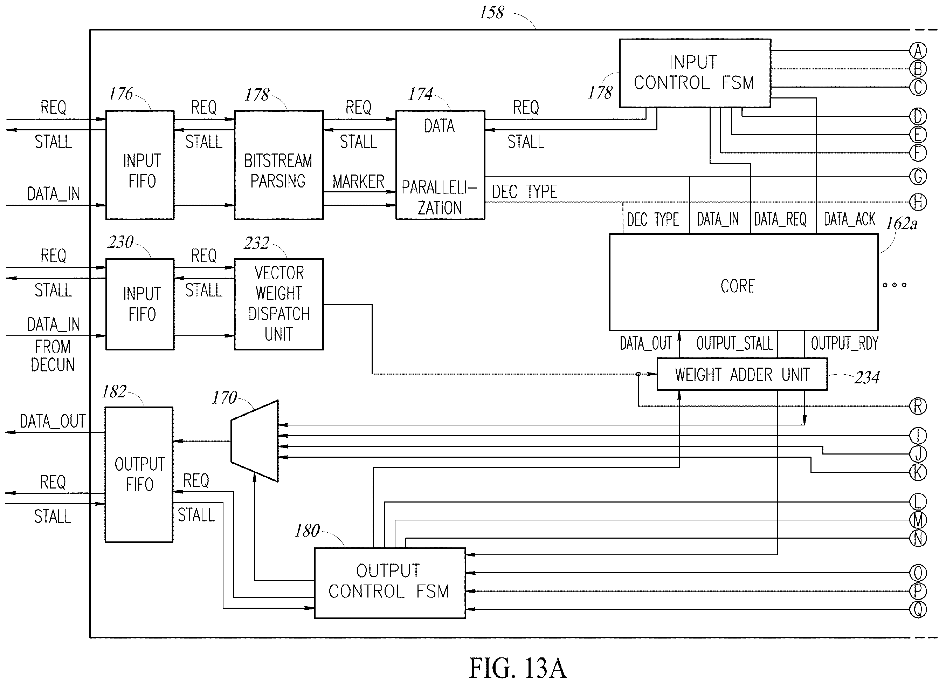

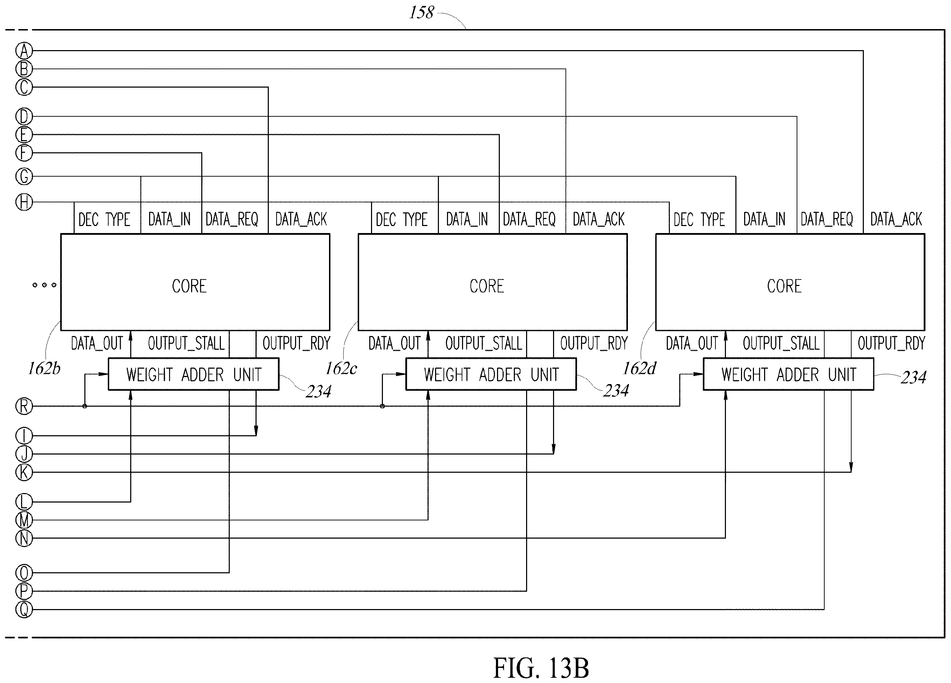

Figures 13A and 13B collectively illustrate a decompression unit 158 of Figure 12, in accordance with some embodiments. The decompression unit 158 of Figures 13A and 13B are substantially similar to the decompression unit 158 of Figures 6A and 6B, except that an input FIFO 230 receives data from the DECUN 222, a vector weight dispatch unit 232 receives the data from the input FIFO 230, and adders 234 are present at the output of the cores 162, the output of the cores 162 and combined them with the data from the DECUN to perform the functions described in relation to Figure 12.

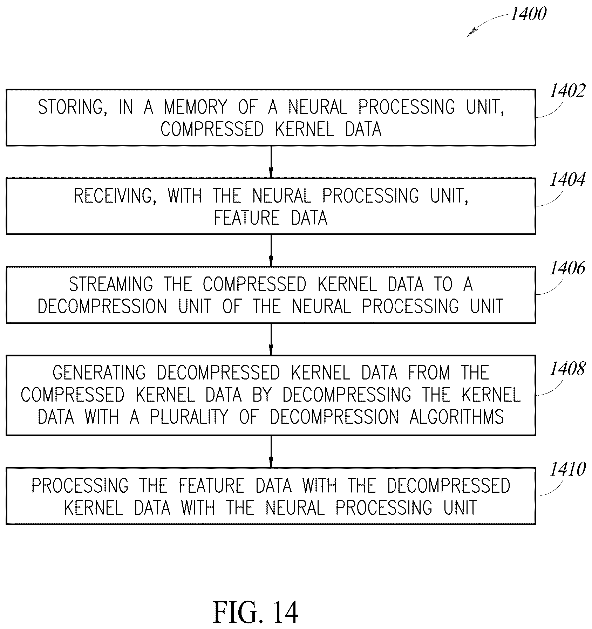

Figure 14 is a flow diagram of a method 1400 for operating a neural processing unit, in accordance with some embodiments. The method 1400 can utilize systems, processes, and components described in relation to foregoing figures. At 1402, the method 1400 includes storing, in a memory of a neural processing unit, compressed kernel data. At 1404, the method 1400 includes receiving, with the neural processing unit, feature data. At 1406, the method 1400 includes streaming the compressed kernel data to a decompression unit of the neural processing unit. At 1408, the method 1400 includes generating decompressed kernel data from the compressed kernel data by decompressing the kernel data with a plurality of decompression algorithms. At 1410, the method 1400 includes processing the feature data with the decompressed kernel data with the neural processing unit.

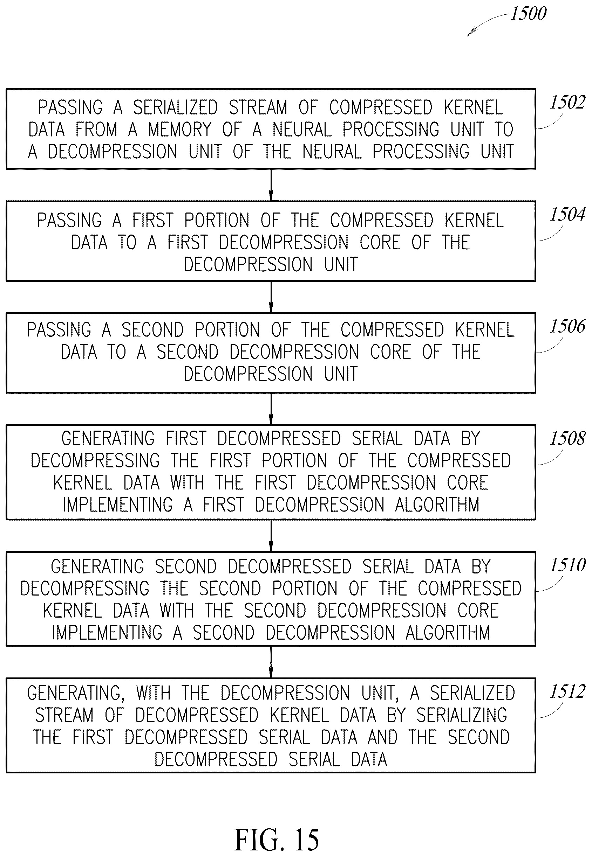

Figure 15 is a flow diagram of a method 1500 for operating a neural processing unit, in accordance with some embodiments. The method 1500 can utilize systems, processes, and components described in relation to foregoing figures. At 1502, the method 1500 includes passing a serialized stream of compressed kernel data from a memory of a neural processing unit to a decompression unit of the neural processing unit. At 1504, the method 1500 includes passing a first portion of the compressed kernel data to a first decompression core of the decompression unit. At 1506, the method 1500 includes passing a second portion of the compressed kernel data to a second decompression core of the decompression unit. At 1508, the method 1500 includes generating first decompressed serial data by decompressing the first portion of the compressed kernel data with the first decompression core implementing a first decompression algorithm. At 1510, the method 1500 includes generating second decompressed serial data by decompressing the second portion of the compressed kernel data with the second decompression core implementing a second decompression algorithm. At 1512, the method 1500 includes generating, with the decompression unit, a serialized stream of decompressed kernel data by serializing the first decompressed serial data and the second decompressed serial data.

In some embodiments, a method includes storing, in a memory of a neural processing unit, compressed kernel data, receiving, with the neural processing unit, feature data, and streaming the compressed kernel data to a first decompression unit of the neural processing unit. The method includes generating decompressed kernel data from the compressed kernel data by decompressing the kernel data with a plurality of decompression algorithms and processing the feature data with the decompressed kernel data with the neural processing unit.

In some embodiments, a method includes passing a serialized stream of compressed kernel data from a memory of a neural processing unit to a first decompression unit of the neural processing unit and passing a first portion of the compressed kernel data to a first decompression core of the first decompression unit. The method includes passing a second portion of the compressed kernel data to a second decompression core of the first decompression unit and generating first decompressed serial data by decompressing the first portion of the compressed kernel data with the first decompression core implementing a first decompression algorithm. The method includes generating second decompressed serial data by decompressing the second portion of the compressed kernel data with the second decompression core implementing a second decompression algorithm. The method includes generating, with the first decompression unit, a serialized stream of decompressed kernel data by serializing the first decompressed serial data and the second decompressed serial data.

In some embodiments, a neural processing unit includes a first decompression unit. The first decompression unit includes a data parallelizer configured to receive a serialized stream of compressed kernel data and a plurality of decompression cores coupled to the data parallelizer and each configured to receive, in parallel, a portion of the compressed kernel data and to generate a corresponding portion of decompressed kernel data. The first decompression unit includes a data serializer coupled to the decompression cores and configured receive the portions of decompressed kernel data and to generate a serialized stream of decompressed kernel data.

Some embodiments may take the form of or comprise computer program products. For example, according to one embodiment there is provided a computer readable medium comprising a computer program adapted to perform one or more of the methods or functions described above. The medium may be a physical storage medium, such as for example a Read Only Memory (ROM) chip, or a disk such as a Digital Versatile Disk (DVD-ROM), Compact Disk (CD-ROM), a hard disk, a memory, a network, or a portable media article to be read by an appropriate drive or via an appropriate connection, including as encoded in one or more barcodes or other related codes stored on one or more such computer-readable mediums and being readable by an appropriate reader device.

Furthermore, in some embodiments, some or all of the methods and/or functionality may be implemented or provided in other manners, such as at least partially in firmware and/or hardware, including, but not limited to, one or more application-specific integrated circuits (ASICs), digital signal processors, discrete circuitry, logic gates, standard integrated circuits, controllers (*e.g*., by executing appropriate instructions, and including microcontrollers and/or embedded controllers), field-programmable gate arrays (FPGAs), complex programmable logic devices (CPLDs), etc., as well as devices that employ RFID technology, and various combinations thereof.

The various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

Example embodiments of the present disclosure are summarized here. Other embodiments can also be understood from the entirety of the specification and the examples.

Example 1 : A method, comprising:
- storing, in a memory of a neural processing unit, compressed kernel data;
- receiving, with the neural processing unit, feature data;
- streaming the compressed kernel data to a first decompression unit of the neural processing unit;
- generating decompressed kernel data from the compressed kernel data by decompressing the kernel data with a plurality of decompression algorithms; and
- processing the feature data with the decompressed kernel data with the neural processing unit.

Example 2 : The method of example 1, wherein:
- streaming the compressed kernel data to the first decompression unit includes providing a serialized stream of the compressed kernel data to the first decompression unit;
- passing respective portions of the compressed kernel data to each of a plurality of decompression cores of the first decompression unit;
- generating, with the decompression cores, respective portions of decompressed kernel data by simultaneously decompressing the respective portions of the compressed kernel data with the decompression cores; and
- generating, with the decompression unit, a stream of decompressed kernel data by serializing the portions of decompressed kernel data.

Example 3 : The method of example 1 or 2, comprising:
- streaming the compressed kernel data to the decompression unit with metadata indicating, for each of a plurality of portions of the neural processing unit, the decompression algorithm to be utilized for the portion;
- reading the metadata with the first decompression unit; and
- configuring, on-the-fly for each portion, one or more decompression cores of the first decompression unit to decompress the portion with the indicated decompression algorithm.

Example 4 : The method of example 2 or 3, wherein the metadata for each portion identifies a number of sections included in the portion and the size of each section included in the portion.

Example 5 : The method of example 4, comprising simultaneously decompressing multiple of the sections each with a respective decompression core.

Example 6 : The method of any one of examples 2 to 5, wherein one or more of the portions are not compressed, wherein the metadata indicates which portions are not compressed.

Example 7 : The method of any one of examples 1 to 6, wherein the decompression is lossless.

Example 8 : The method of any one of examples 1 to 7, wherein streaming the kernel data includes streaming lossless compressed weight error values to the first decompression unit, the method comprising generating decompressed weight error values by decompression the compressed weight error values.

Example 9 : The method of example 8, comprising:
- streaming centroid index values to a second decompression unit of the neural processing unit; and
- outputting, for each centroid index value with the second decompression unit, a vector quantized weight vector.

Example 10 : The method of example 9, comprising generating reconstructed weight vectors by combining each vector quantized weight vector with a corresponding decompressed weight error value.

Example 11 : A method, comprising:
- passing a serialized stream of compressed kernel data from a memory of a neural processing unit to a first decompression unit of the neural processing unit;
- passing a first portion of the compressed kernel data to a first decompression core of the first decompression unit;
- passing a second portion of the compressed kernel data to a second decompression core of the first decompression unit;
- generating first decompressed serial data by decompressing the first portion of the compressed kernel data with the first decompression core implementing a first decompression algorithm;
- generating second decompressed serial data by decompressing the second portion of the compressed kernel data with the second decompression core implementing a second decompression algorithm; and
- generating, with the first decompression unit, a serialized stream of decompressed kernel data by serializing the first decompressed serial data and the second decompressed serial data.

Example 12 : The method of example 11, wherein the first decompression algorithm is a run-length coding algorithm.

Example 13 : The method of example 12, wherein the second decompression algorithm is a zero Huffman coding algorithm or a zero-value compression algorithm.

Example 14 : The method of any one of examples 11 to 13, wherein the compressed kernel data includes compressed weight error values of a vector quantization scheme.

Example 15 : The method of example 14, comprising:
- passing, to a second decompression unit of the neural processing unit, centroid index values of the vector quantization scheme;
- outputting, for each centroid index value with the second decompression unit, a vector quantized weight value associated with the centroid index; and
- generating reconstructed weight vectors by combining each decompressed weight error value with a corresponding one of the vector quantized weight values.

Example 16 : The method of example 15, wherein the compressed weight error values are lossless and the compressed centroid values are lossy.

Example 17 : A neural processing unit, comprising:
- a first decompression unit including:
   - a data parallelizer configured receive a serialized stream of compressed kernel data;
   - a plurality of decompression cores coupled to the data parallelizer and each configured to receive, in parallel, a portion of the compressed kernel data and to generate a corresponding portion of decompressed kernel data; and
   - a data serializer coupled to the decompression cores and configured receive the portions of decompressed kernel data and to generate a serialized stream of decompressed kernel data.

Example 18 : The neural processing unit of example 17, wherein the data parallelizer is configured to read metadata from the serialized stream of compressed kernel and to selectively configure the decompression cores to decompress the compressed kernel data with the decompression algorithm indicated by the metadata.

Example 19 : The neural processing unit of example 17 or 18, comprising:
- a second decompression unit configured to receive centroid index values of a vector quantization procedure and to output, for each centroid index value, a vector quantized weight value, wherein the serialized stream of decompressed kernel data includes a plurality of decompressed weight error values, wherein the first decompression unit includes an adder configured to receive the decompressed weight error values and the vector quantized weight vectors and to generate reconstructed weight vectors by combining the decompressed weight error values and the vector quantized weight vectors, wherein the adder.

Example 20 : The neural processing unit of any one of examples 17 to 19, comprising:
- a second decompression unit configured to receive centroid index values of a vector quantization procedure and to output, for each compressed index value, a vector quantized weight value, wherein the serialized stream of decompressed kernel data includes a plurality of decompressed weight error values; and
- an arithmetic unit configured to receive the decompressed weight error values and the vector quantized weight vectors and to generate reconstructed weight vectors by combining the weight error values and the vector quantized weight vectors.

Example 21 : A method, comprising:
- generating kernel data for a neural network by training the neural network with a machine learning process;
- selecting, for a first portion of the kernel data, a first data compression algorithm based on characteristics of the first portion of the kernel data;
- selecting, for a second portion of the kernel data, a second data compression algorithm based on characteristics of the second portion of the kernel data; and
- generating compressed kernel data by:
   - compressing the first portion of the kernel data with the first compression algorithm;
   - compressing the second portion of the kernel data with the second compression algorithm; and
   - generating metadata indicating the first and second compression algorithms.

Example 22 : The method of example 21, wherein the first portion of the kernel data corresponds to a first layer of the neural network, wherein the second portion of the kernel data corresponds to a second layer of the neural network.

Example 23 : The method of example 21 or 22, wherein the first portion of the kernel data corresponds to a first portion of a first layer of the neural network, wherein the second portion of the kernel data corresponds to a second portion of the second layer of the neural network.

Example 24 : The method of any one of examples 21 to 23, wherein the first portion of the kernel data corresponds to a first tensor of the kernel data, wherein the second portion of the kernel data corresponds to a second tensor of the kernel data.

Example 25 : The method of any one of examples 21 to 24, wherein the first portion of the kernel data corresponds to a first portion of a first tensor of the neural network, wherein the second portion of the kernel data corresponds to a second portion of the first tensor of the neural network.

Example 26 : The method any one of examples 21 to 25, wherein the first decompression algorithm is a run-length coding algorithm, wherein the second decompression algorithm is a zero Huffman coding algorithm or a zero-value compression algorithm.

## Claims

1. A method for decompressing kernel data, comprising:
- storing, in a memory of a neural processing unit, compressed kernel data;
- streaming the compressed kernel data to a first decompression unit of the neural processing unit; and
- generating decompressed kernel data from the compressed kernel data by decompressing the kernel data with a plurality of decompression algorithms.

2. The method of claim 1, comprising:
- receiving, with the neural processing unit, feature data;
- streaming the compressed kernel data to a first decompression unit of the neural-processing the feature data with the decompressed kernel data with the neural processing unit.

3. The method of claim 1 or 2, wherein:
- streaming the compressed kernel data to the first decompression unit includes providing a serialized stream of the compressed kernel data to the first decompression unit;
- passing respective first and second portions of the compressed kernel data to each of a plurality of first and second decompression cores of the first decompression unit;
- generating, with the first and second decompression cores, respective first and second portions of decompressed kernel data by simultaneously decompressing the respective first and second portions of the compressed kernel data with the first and second decompression cores; and
- generating, with the decompression unit, a stream of decompressed kernel data by serializing the first and second portions of decompressed kernel data.

4. The method of any one of claims 1 to 3, comprising:
- streaming the compressed kernel data to the decompression unit with metadata indicating, for each of a plurality of first and second portions of the neural processing unit, the first or second decompression algorithm to be utilized for the first or second portion;
- reading the metadata with the first decompression unit; and
- configuring, on-the-fly for each first or second portion, one or more first and second decompression cores of the first decompression unit to decompress the first or second portion with the indicated first or second decompression algorithm.

5. The method of claim 3 or 4, wherein the metadata for each first or second portion identifies a number of sections included in the portion and the size of each section included in the portion,
for example, comprising simultaneously decompressing multiple of the first and second sections each with a respective first or second decompression core.

6. The method of any one of claim 3 to 5, wherein one or more of the first and second portions are not compressed, wherein the metadata indicates which first and second portions are not compressed.

7. The method of any one of claim 1 to 6, wherein the decompression is lossless.

8. The method of any one of claim 1 to 7, wherein streaming the kernel data includes streaming lossless compressed weight error values to the first decompression unit, the method comprising generating decompressed weight error values by decompression the compressed weight error values,
for example, the method comprises:
- streaming centroid index values to a second decompression unit of the neural processing unit; and
- outputting, for each centroid index value with the second decompression unit, a vector quantized weight vector,
for example the method comprises generating reconstructed weight vectors by combining each vector quantized weight vector with a corresponding decompressed weight error value.

9. The method of any one of claim 1 to 8, wherein the compressed kernel data includes compressed weight error values of a vector quantization scheme,
for example the method comprises:
- passing, to a second decompression unit of the neural processing unit, centroid index values of the vector quantization scheme;
- outputting, for each centroid index value with the second decompression unit, a vector quantized weight value associated with the centroid index; and
- generating reconstructed weight vectors by combining each decompressed weight error value with a corresponding one of the vector quantized weight values,
for example wherein the compressed weight error values are lossless and the compressed centroid values are lossy.

10. A neural processing unit, comprising:
- a first decompression unit including:
- a data parallelizer configured receive a serialized stream of compressed kernel data;
- a plurality of decompression cores coupled to the data parallelizer and each configured to receive, in parallel, a portion of the compressed kernel data and to generate a corresponding portion of decompressed kernel data; and
- a data serializer coupled to the decompression cores and configured receive the portions of decompressed kernel data and to generate a serialized stream of decompressed kernel data.

11. The neural processing unit of claim 10, wherein the data parallelizer is configured to read metadata from the serialized stream of compressed kernel and to selectively configure the decompression cores to decompress the compressed kernel data with the decompression algorithm indicated by the metadata.

12. The neural processing unit of claim 10 or 11, comprising:
- a second decompression unit configured to receive centroid index values of a vector quantization procedure and to output, for each centroid index value, a vector quantized weight value, wherein the serialized stream of decompressed kernel data includes a plurality of decompressed weight error values, wherein the first decompression unit includes an adder configured to receive the decompressed weight error values and the vector quantized weight vectors and to generate reconstructed weight vectors by combining the decompressed weight error values and the vector quantized weight vectors, wherein the adder,
for example the neural processing unit, comprises:
- a second decompression unit configured to receive centroid index values of a vector quantization procedure and to output, for each compressed index value, a vector quantized weight value, wherein the serialized stream of decompressed kernel data includes a plurality of decompressed weight error values; and
- an arithmetic unit configured to receive the decompressed weight error values and the vector quantized weight vectors and to generate reconstructed weight vectors by combining the weight error values and the vector quantized weight vectors.

13. A method for compressing kernel data, comprising:
- generating kernel data for a neural network by training the neural network with a machine learning process;
- selecting, for a first portion of the kernel data, a first data compression algorithm based on characteristics of the first portion of the kernel data;
- selecting, for a second portion of the kernel data, a second data compression algorithm based on characteristics of the second portion of the kernel data; and
- generating compressed kernel data by:
- compressing the first portion of the kernel data with the first compression algorithm;
- compressing the second portion of the kernel data with the second compression algorithm; and
- generating metadata indicating the first and second compression algorithms.

14. The method of claim 13, wherein the first portion of the kernel data corresponds to a first layer of the neural network, wherein the second portion of the kernel data corresponds to a second layer of the neural network,
or
wherein the first portion of the kernel data corresponds to a first portion of a first layer of the neural network, wherein the second portion of the kernel data corresponds to a second portion of the second layer of the neural network,
or
wherein the first portion of the kernel data corresponds to a first tensor of the kernel data,
wherein the second portion of the kernel data corresponds to a second tensor of the kernel data,
or
wherein the first portion of the kernel data corresponds to a first portion of a first tensor of the neural network, wherein the second portion of the kernel data corresponds to a second portion of the first tensor of the neural network.

15. The method of one of claims 3 to 9 or 13 or 14, wherein the first decompression algorithm is a run-length coding algorithm,
and/or
wherein the second decompression algorithm is a zero Huffman coding algorithm or a zero-value compression algorithm.
